# EUROPEAN PATENT APPLICATION

(11) **EP 1 717 461 A1**
(43) Date of publication of application: **02.11.2006**
(21) Application number: 06113155.3
(22) Date of filing: 26.04.2006
(51) Int. Cl.: F16C 1/14, F16C 1/22, F16H 59/10

(54) **Shifter assembly with cable adjuster**

(30) Priority: 26.04.2005 US 132738
(71) Applicant: Dura Global Technologies, Inc., Rochester Hills, Michigan 48309 (US)
(72) Inventor: Ruhlander, Gregory Philip, Rochester Hills, MI 48307 (US)
(74) Representative: Gervasi, Gemma

(57) **Abstract**

A shifter assembly includes a base (10) having an integrally formed receptacle (20). The receptacle (20) includes an outer peripheral surface (25) and a bore (30) formed along a central axis of the receptacle (20). A lock cavity (40) is defined by a slot (45) formed through a top (50) of the outer peripheral surface (25). A cable assembly (55) including a conduit (60) surrounding a core wire (65) has first and second ends (70,75). The first end (70) is connected with the shifter assembly (5) and a second end (75) is operably connected to a transmission. A cable adjuster body (80) is coupled to the cable assembly (55) at the first end (70) of the cable assembly (55). The cable adjuster body (80) is received within the bore (30) of the integrally formed receptacle (20). A lock member (85) is adapted to be received within the lock cavity (40). The lock member (85) is movable from an adjusting position allowing relative movement of the cable adjuster body (80) relative to the receptacle (20), to a locked position, wherein the lock member (85) engages the cable adjuster body (80) preventing movement of the cable adjuster body (80) relative to the receptacle (20).

## Description

### FIELD OF THE INVENTION

The invention relates to shifter assemblies, and with more particularity to shifter assemblies including a cable adjust system.

### BACKGROUND OF THE INVENTION

Shifter assemblies are utilized in automotive applications for changing between various positions of a transmission. Shifters generally include a base attached to a floor of a vehicle. The base accommodates a shift lever to facilitate movement between various engagement positions associated with the transmission.

The shift assemblies may be connected to the gear transmission by a push-pull cable, as is known in the art. In such systems, movement of the shift lever pushes or pulls on the cable transmitting a force to the transmission. In such installations, the shifter and cable are coupled to the transmission. For proper operation and installation, a length adjustment of the cable is often necessary to remove slack from the cable, assuring that the shifter and transmission are properly linked.

Common prior art cable adjustment assemblies may include core adjustment or conduit adjustment systems. Typically, such systems include separate components associated with the cable to adjust the overall length after the cable has been installed. Generally, conduit adjust systems are attached at a transmission end of the cable and include a two-pronged terminal that is attached to the transmission. In such designs, the two-pronged terminal is a common failure mode under a high system load.

There is therefore a need in the art for an improved shifter design incorporating a push-pull cable system having a conduit adjustment combined with a shifter base. There is also a need in the art for an improved shifter design in which a cable is inserted directly into a shifter base with the base acting as an end fitting or abutment; thereby eliminating typical prior art separate adjustment components and integrating a cable and shifter base as a system.

### SUMMARY OF THE INVENTION

A shifter assembly includes a base having an integrally formed receptacle. The receptacle includes an outer peripheral surface and a bore formed along a central axis of the receptacle. A lock cavity is defined by a slot formed through a top of the outer peripheral surface. A cable assembly including a conduit surrounding a core wire has first and second ends. The first end is operably connected with the shifter assembly and a second end is operably connected to a transmission. A cable adjuster body is coupled to the cable assembly at the first end of the cable assembly. The cable adjuster body is received within the bore of the integrally formed receptacle. A lock member is adapted to be received within the lock cavity. The lock member is movable from an adjusting position allowing relative movement of the cable adjuster body relative to the receptacle, to a locked position, wherein the lock member engages the cable adjuster body preventing movement of the cable adjuster body relative to the receptacle.

### BRIEF DESCRIPTION OF THE DRAWINGS

Figure 1 is a front perspective view of a shifter assembly according to a preferred embodiment of the present invention;

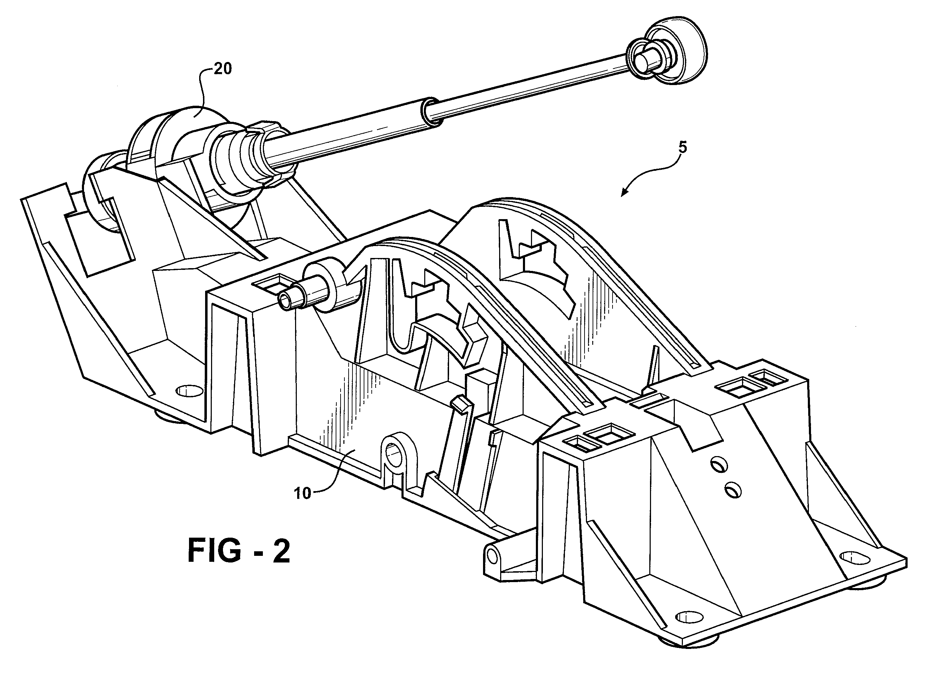

Figure 2 is a rear perspective view of a shifter assembly according to a preferred embodiment of the present invention;

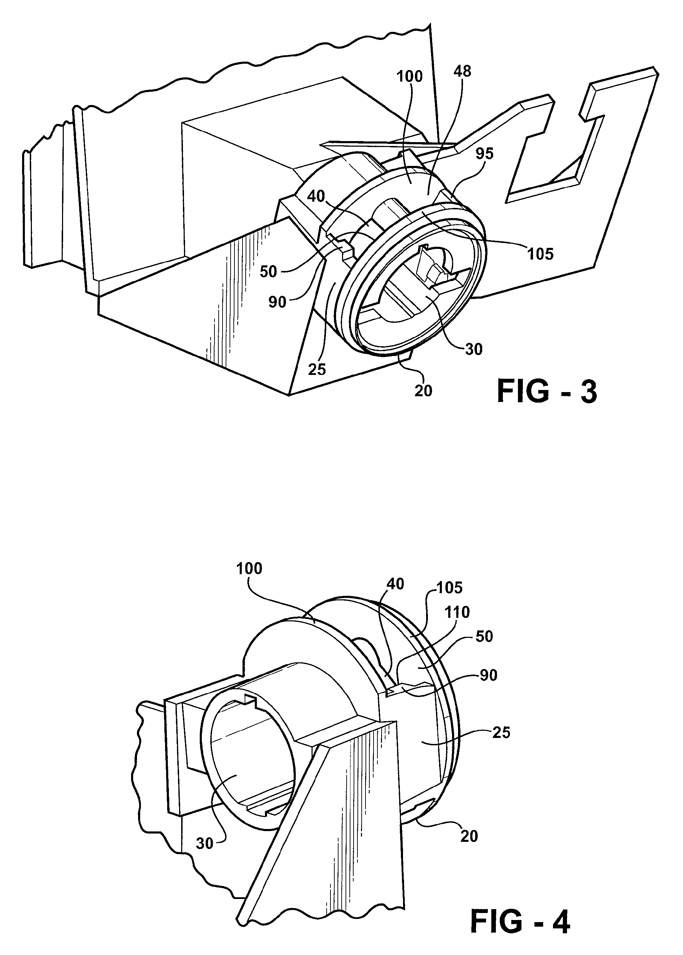

Figure 3 is a partial perspective view of a receptacle attached to a shifter base;

Figure 4 is a partial rear perspective view of a receptacle attached to a shifter base;

Figure 5 is a perspective assembly view detailing the cable assembly, receptacle, and lock member of the shifter assembly;

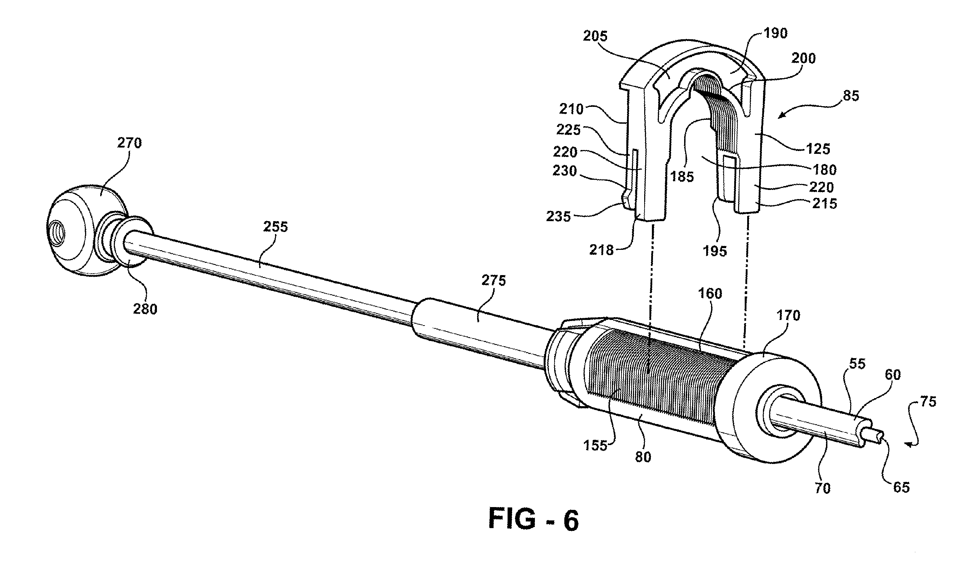

Figure 6 is a perspective view detailing the cable assembly, cable adjuster body and lock member of the shifter assembly;

Figure 7 is a partial sectional view detailing the lock member and cable adjuster body in an adjusting position; and

Figure 8 is a partial sectional view detailing the lock member and adjuster body in a locked position.

### DETAILED DESCRIPTION OF THE PREFERRED EMBODIMENTS

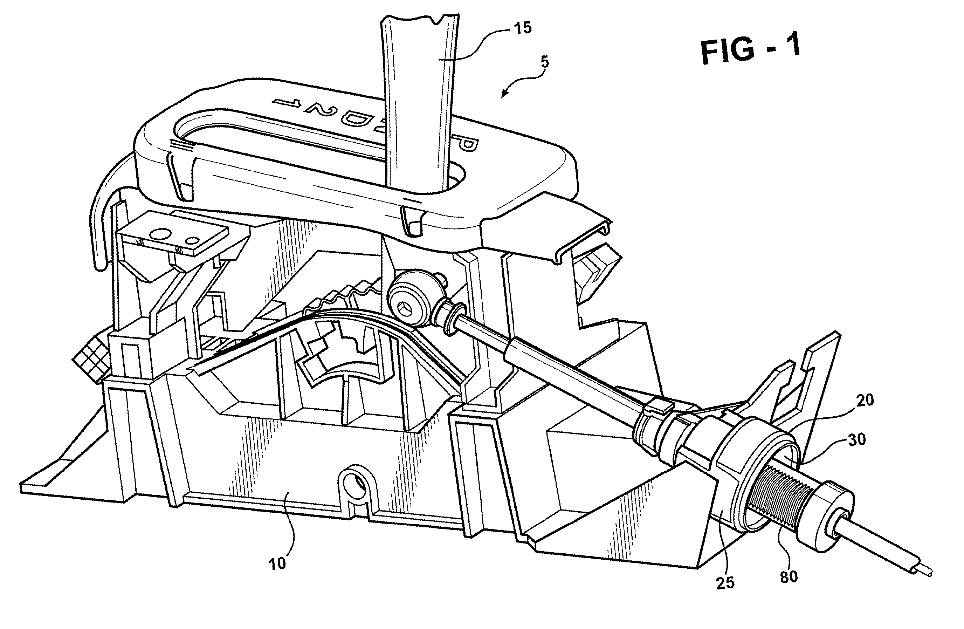

Referring to Figure 1, there is shown a shifter assembly 5 in accordance with a preferred embodiment of the present invention. The shifter assembly 5 includes a base 10 for accommodating a shift lever 15. The base 10 includes an integrally formed receptacle 20. The receptacle 20 includes an outer peripheral surface 25 and a bore 30 formed along a central axis 35 of the receptacle 20. A lock cavity 40 is defined by a slot 45 that is formed through a top 50 of the outer peripheral surface 25.

A cable assembly 55 having a conduit 60 surrounding a core wire 65 is coupled with the shifter assembly 5 at a first end 70 of the cable assembly 55, and is connected to a transmission (not shown) at a second end 75 of the cable assembly 55.

A cable adjuster body 80 is coupled to the cable assembly 55 at the first end 70 of the cable assembly 55. The cable adjuster body 80 is received within the bore 30 of the integrally formed receptacle 20.

A lock member 85 is received in the lock cavity 40 and is capable of adjustment from an adjusting position allowing relative movement of the cable adjuster body 80 relative to the receptacle 20 to a locked position, where the lock member 85 engages the cable adjuster body 80 preventing movement of the cable adjuster body 80 relative to the receptacle 20.

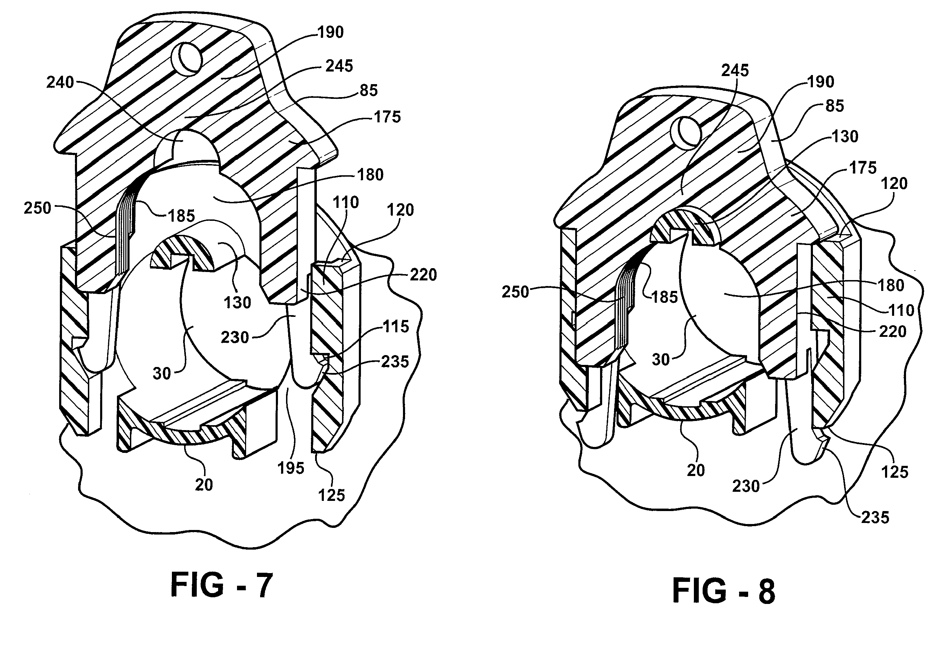

In a preferred aspect of the present invention, the base 10 is formed of a suitable molded material to form an integral receptacle 20. The lock cavity 40 is defined by the slot 45 formed through the top 50 of the outer peripheral surface 25 of the receptacle 20. Preferably, the lock cavity 40 includes opposing side surfaces 90, 95 connected by opposing end surfaces 100, 105. The opposing side surfaces 90, 95 preferably include guide channels 110 formed thereon, for accommodating the lock member 85. The guide channels 110 preferably include pockets 115 formed thereon to engage the lock member 85 when the lock member 85 is in the adjusting position, as best shown in Figure 7. The guide channels 110 also include a top surface 120 and an opposing end surface 125 for engaging the lock member 85 when the lock member 85 is in the locked position, as best shown in Figure 8. In a preferred aspect, at least one of the end surfaces 100, 105 includes a location projection 130 that extends therefrom to engage the lock member 85 when the lock member 85 is in the locked position.

The cable adjuster body 80 that is coupled to the cable assembly 55 is a generally cylindrical body 135 having an outer surface 140 and opposing first and second ends 145, 150. The outer surface 140 preferably includes locking teeth 155 formed thereon. Additionally, the outer surface 140 preferably includes a contour or shape 160 for locating and orienting the cable adjuster body 80 within the integrally formed receptacle 20. The first end 145 of the adjuster body 80 includes tabs 165 formed thereon for preventing removal of the adjuster body 80 from the bore 30 of the receptacle 20 after the adjuster body 80 has been placed within the integrally formed receptacle 20. The second end 150 of the adjuster body 80 preferably includes a collar 170 formed thereon for abutting the receptacle 20 and preventing movement of the adjuster body 80 into the bore 30 of the receptacle 20 beyond the collar 170. In this manner, once the adjuster body 80 has been assembled or inserted inside the receptacle 20 it is prevented from moving beyond the boundaries of the receptacle 20 on both ends 145, 150; thereby defining the limits of the conduit adjustment of the present invention.

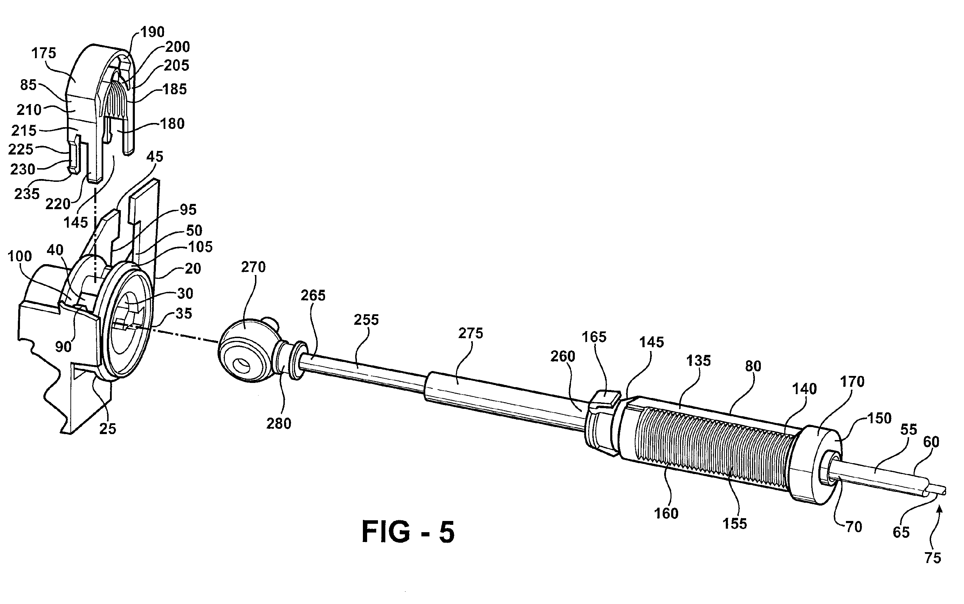

Referring to Figure 5, the lock member 85 is preferably a horseshoe-shaped body 175 having a lock slot 180 formed therethrough. The lock slot 180 preferably includes an inner surface 185 and closed top 190 and open bottom 195 sections. The closed top section 190 preferably includes a curved section 200 having front and rear surfaces 205, 210. Additionally, the open bottom section 195 preferably includes leg portions 215 that extend downward from the curved section 200 of the closed top section 190. The leg portions 215 are spaced about the lock slot 180. The spaced leg portions 215 preferably include guide portions 220 and locking portions 225 spaced from the guide portions 220. The lock portions 225 preferably include flexible legs 230 having prongs 235 formed at the ends thereof to engage the lock cavity 40 of the receptacle 20, as will be discussed in more detail below. The guide portions 220 of the spaced leg portions 215 travel within the guide channels 110 of the integrally formed receptacle 20 to assure accurate movement of the lock member 85 within the lock cavity 40.

Referring to Figures 7 and 8, the lock slot 180 of the lock member 85 preferably includes a notch 240 formed on a top center portion 245 of the lock slot 180 for engaging the lock cavity 40 when the lock member 85 is in the locked position, as shown in Figure 8. Additionally, the lock slot 180 preferably includes teeth 250 formed on the inner surface 185 for mating with the adjuster body 80 when the lock member 85 is in the locked position.

As previously stated, the cable assembly 55 includes a conduit 60 surrounding a core wire 65. The cable assembly 55 includes first and second ends 70, 75 with the first end 70 operably connected with the shifter assembly 5. In a preferred aspect, the first end 70 of the cable assembly 55 includes a steel rod 255 that is connected or bonded to the core wire 65 at a first end 260 of the steel rod 255. The second end 265 of the steel rod 255 is preferably coupled to a fitting 270 that attaches to the shift mechanism. The steel rod 255 is preferably disposed in a support sleeve 275 that is positioned adjacent the adjuster body 80 to allow for smooth movement of the steel rod 255 to move the core wire 65 within the conduit 60. In a preferred aspect of the present invention, the fitting 270 may include an isolator 280 for reducing or damping vibrations. The isolator 280 preferably includes an elastomeric material for absorbing vibrations associated with the transmission and shifter. A suitable isolator material includes any polymeric, elastomeric or other material commonly known for absorbing vibrations. Similarly, the adjuster body 80 is preferably isolated from the conduit 60. Again, dampening materials such as elastomers and polymers may be utilized to isolate the conduit 60 from the adjuster body 80, again to provide improved vibration control.

As previously stated, the adjuster body 80 is coupled to the cable assembly 55. Preferably, the adjuster body 80 is molded or formed around the conduit 60 such that they are permanently connected. The isolator material may also be molded to the conduit to dampen vibrations.

In use, the cable assembly 55 including the fitting 270 and steel rod 255 is inserted within the integrally formed receptacle 20. As the cable assembly 55 is moved forward within the receptacle 20, the adjuster body 80 passes through the bore 30 of the receptacle 20 such that the tabs 165 on the adjuster body 80 engage the receptacle 20 to prevent the adjuster body 80 from being removed rearward through the receptacle 20. As previously stated above, the adjuster body 80 preferably includes a contour or shape 160 such that it may be inserted in only a certain orientation within the receptacle 20, thereby properly aligning the fitting 270 for attachment to the shift mechanism.

The lock member 85 is inserted within the lock cavity 40 formed in the receptacle 20 such that the guide portions 220 of the spaced leg portions 215 travel within the guide channels 110 formed within the receptacle 20. Additionally, the lock portions 225 of the spaced leg portions 215 have flexible legs 230 including prongs 235 that are received within the lock cavity 40 and engage the lock cavity 40 when in the adjustment position, allowing for relative movement of the adjuster body 80 with respect to the integrally formed receptacle 20.

The cable assembly 55 may then be pulled further through the receptacle 20 such that the fitting 270 is properly attached to the shift mechanism. The adjuster body 80 is allowed to travel within the receptacle 20; thereby adjusting the slack within the cable assembly 55. Once the fitting 270 has been connected to the shifter, the lock member 85 may then be moved to the locked position by pushing downward on the lock member 85, such that the lock slot 180 formed on the lock member 85 engages the adjuster body 80. Additionally, the flexible legs 230 having prongs 235 are moved from the adjustment position in the pockets 115 downward such that they pass beyond the end surface 125 and engage the end surface 125 of the lock cavity 40. Additionally, the notch 240 formed on the lock slot 180 engages the projection 130 on the lock cavity 40 providing a stop indicating the lock member 85 is in the locked position.

When the lock member 85 is in the locked position, the teeth 250 formed on the inner surface 185 of the lock member 85 engage the teeth 155 formed on the outer surface 140 of the adjuster body 80 to securely retain the adjuster body 80 and prevent movement relative to the receptacle 20. In this manner, the slack within the cable assembly 55 has been removed and a proper length of the cable assembly 55 with respect to the shifter and transmission is maintained.

The invention has been described in an illustrative manner. It is to be understood that the terminology which has been used is intended to be in the nature of words of description rather than limitation. Many modifications and variations of the invention are possible in light of the above teachings. Therefore, within the scope of the appended claims, the invention may be practiced other than as specifically described.

## Claims

1. A shifter assembly comprising:
a base, the base including an integrally formed receptacle, the receptacle including an outer peripheral surface and a bore formed along a central axis of the receptacle and a lock cavity defined by a slot formed through a top of the outer peripheral surface;
a cable assembly including a conduit surrounding a core wire, the cable assembly including first and second ends, the first end operably connected with the shifter assembly and the second end operably connected to a transmission;
a cable adjuster body coupled to the cable assembly at the first end of the cable assembly, the cable adjuster body received within the bore of the integrally formed receptacle;
a lock member adapted to be received in the lock cavity, the lock member movable from an adjusting position allowing relative movement of the cable adjuster body relative to the receptacle, to a locked position wherein the lock member engages the cable adjuster body preventing movement of the cable adjuster body relative to the receptacle.

2. The shifter assembly of Claim 1 wherein the lock cavity includes opposing side surfaces connected by opposing end surfaces, preferably the opposing side surfaces include guide channels formed thereon.

3. The shifter assembly of Claim 1 wherein the lock cavity includes opposing side surfaces connected by opposing end surfaces, the opposing side surfaces include guide channels formed thereon, and the guide channels include:
• pockets formed thereon engaging the lock member when the lock member is in the adjusting position, or
• a top surface and an opposing end surface engaging the lock member when the lock member is in the locked position.

4. The shifter assembly of Claim 1 wherein the lock cavity includes opposing side surfaces connected by opposing end surfaces and at least one of the end walls includes a location projection extending therefrom and engaging the lock member when the lock member is in the locked position.

5. The shifter assembly of Claim 1 wherein the adjuster body is a generally cylindrical body having an outer surface and opposing first and second ends.

6. The shifter assembly of Claim 5 wherein the outer surface of the adjuster body includes:
• locking teeth formed thereon, or
• a contour for locating and orienting the adjuster body within the receptacle.

7. The shifter assembly of Claim 5 wherein the first end of the adjuster body includes tabs:
• formed thereon for preventing removal of the adjuster body from the bore of the receptacle, or
• a collar formed thereon for abutting the receptacle and preventing movement of the adjuster body in the bore of the receptacle beyond the collar.

8. The shifter assembly of Claim 1 wherein the lock member is a horseshoe-shaped body having a lock slot formed there through, the lock slot including an inner surface and closed top and open bottom sections.

9. The shifter assembly of Claim 8 wherein the closed top section includes a curved section having front and rear surfaces; preferably
the open bottom section includes leg portions extending downward from the curved section and spaced about the lock slot; more preferably
the spaced leg portions include guide portions and locking portions spaced from each other, most preferably
the lock portion includes flexible legs having prongs formed at ends thereof for engaging the lock cavity of the receptacle.

10. The shifter assembly of Claim 8 wherein the lock slot includes:
• a notch formed on a top center portion of the lock slot for engaging the lock cavity when the lock member is in the locked position, or
• teeth formed on the inner surface for mating with the adjuster body when the lock member is in the locked position.

11. The shifter assembly of Claim 1 wherein the first end of the cable assembly includes a steel rod connected to the core wire at a first end of the steel rod, and coupled to a fitting at a second end of the steel rod, the steel rod disposed in a support sleeve positioned adjacent the adjuster body.

12. A shifter assembly comprising:
a base, the base including an integrally formed receptacle, the receptacle including a bore formed along a central axis of the receptacle;
a cable assembly including a conduit surrounding a core wire, the cable assembly including first and second ends, the first end operably connected with the shifter assembly and the second end operably connected to a transmission;
a cable adjuster body coupled to the cable assembly at the first end of the cable assembly, the cable adjuster body received within the bore of the integrally formed receptacle;
a lock member attached to the receptacle and adapted to selectively engage the cable adjuster body for adjusting the length of the cable assembly.
